(19) Europäisches Patentamt
European Patent Office
Office européen des brevets

(11) Veröffentlichungsnummer : **0 023 302**
**B1**

(12) # EUROPÄISCHE PATENTSCHRIFT

(45) Veröffentlichungstag der Patentschrift : **11.08.82**

(51) Int. Cl.³ : **B 01 J 13/02**

(21) Anmeldenummer : **80104037.9**

(22) Anmeldetag : **12.07.80**

(54) **Sprühtrocknung von Mikrokapseldispersionen.**

(30) Priorität : **26.07.79 DE 2930409**

(43) Veröffentlichungstag der Anmeldung : **04.02.81 (Patentblatt 81/05)**

(45) Bekanntmachung des Hinweises auf die Patenterteilung : **11.08.82 Patentblatt 82/32**

(84) Benannte Vertragsstaaten : **BE CH DE FR GB IT LI NL SE**

(56) Entgegenhaltungen :
**FR A 2 148 118**
**FR A 2 372 656**
**FR A 2 392 715**
**GB A 1 371 179**

(73) Patentinhaber : **BAYER AG**
**Zentralbereich Patente, Marken und Lizenzen**
**D-5090 Leverkusen 1, Bayerwerk (DE)**

(72) Erfinder : **Alberts, Heinrich, Dr.**
**Morgengraben 16**
**D-5000 Köln 80 (DE)**
Erfinder : **Dahm, Manfred, Dr.**
**Am Falkenberg 29**
**D-5090 Leverkusen 31 (DE)**
Erfinder : **Jabs, Gert, Dr.**
**Wingensieferkamp 25**
**D-5068 Odenthal (DE)**
Erfinder : **Wegner, Christian, Dr.**
**Roggendorfstrasse 65E**
**D-5000 Köln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

EP 0 023 302 B1

Sprühtrocknung von Mikrokapseldispersionen

Die Erfindung betrifft ein Verfahren zur Sprühtrocknung von wäßrigen Dispersionen, die Mikrokapseln mit Polyharnstoffwänden (aus Polyisocyanat und Polyamin) enthalten, in Gegenwart von Trockenhilfsmitteln, wobei die Trockenhilfsmittel während der kapselwandbildenden Polyaddition in situ hergestellt werden.

Die Herstellung von Mikrokapseldispersionen, speziell zur Herstellung von Reaktionsdurchschreibepapieren ist bekannt (vgl. M. Gutcho, Capsule Technology and Microencapsulation, Noyes Data Corporation,1972, Seiten 242 bis 277 ; G. Baxter in Microencapsulation, Processes and Applications, herausgegeben von J.E. Vandegaer, Plenum Press, New York, London, Seiten 127 bis 143). Dort werden auch Verfahren zur Sprühtrocknung dieser Dispersionen genannt.

Mikrokapseldispersionen, in denen die Kapselwände aus durch Isocyanat-Amin-Polyaddition erhaltenen Polyharnstoffen bestehen, sind sehr schwierig zu trocknen. Während der Sprühtrocknung bildet sich ein ständig wachsender Belag aus agglomerierten Kapseln, so daß die Ausbeute vermindert wird.

Die getrockneten Kapseln selbst sind ebenfalls nicht agglomeratfrei und lassen sich nicht mehr ausreichend zu stabilen Suspensionen redispergieren. Sie sind daher für viele Anwendungen unbrauchbar.

Es ist auch bekannt, bei der Sprühtrocknung der Dispersion Trockenhilfsmittel zuzusetzen, beispielsweise salzartige Verbindungen, die das den Partikeln anhaftende Restwasser binden. Insbesondere sind Glaubersalz, Kreide, Silikate genannt worden.

Die Trockenhilfsmittel müssen aus kleinsten Partikeln bestehen und in der wäßrigen Dispersion möglichst homogen verteilt werden. Ihre Anwendung ist daher aufwendig und verhindert zudem das Agglomerieren von Kapseln, deren Wände aus Polyharnstoff bestehen, nicht vollständig.

Dieser Erfindung liegt die Erkenntnis zugrunde, daß anorganische Trockenhilfsmittel in besonders aktiver Form bei der Polyaddition von Polyisocyanat und Polyamin in situ hergestellt werden können. Man nutzt die im Verlauf der Polyadditionsreaktion fortschreitende pH-Werterniedrigung und gleichzeitige $CO_2$-Entwicklung, um Erdalkalisalze in die unlöslichen Carbonate oder Silikate in die unlöslichen Polysilikate zu überführen.

Gegenstand der Erfindung ist ein Verfahren zur Herstellung von Mikrokapseln mit Wänden aus Polyharnstoffen, in dem man in an sich bekannter Weise durch Grenzflächenpolyaddition von Polyisocyanat und Polyamin in wäßriger Emulsion um ein Kernmaterial eine Hülle bildet und die erhaltene Suspension von Mikrokapseln durch Sprühtrocknung trocknet, welches dadurch gekennzeichnet ist, daß man der wäßrigen Emulsion 1 bis 10 Gew.-Teile, bezogen auf die Mikrokapseln, eines wasserlöslichen Erdalkalisalzes und/oder eines wasserlöslichen Silikats zufügt. Durch dieses Verfahren werden die Mikrokapseln bei der Sprühtrocknung in Form von Agglomerat-freien, freifließenden Pulvern erhalten, zusätzlich wird das Schäumen der wäßrigen Mikrokapselsuspension bei der Abreaktion der Kapselwandbildung verhindert.

Die Herstellung von Mikrokapseln nach dem Polyisocyanat-Polyamin-Additionsverfahren ist an sich bekannt.

Dafür geeignete Isocyanate sind beispielsweise Diisocyanate, wie Xylylen-1,4-diisocyanat, Xylylen-1,3-diisocyanat, Trimethylendiisocyanat, Hexamethylendiisocyanat, Ethylidendiisocyanat, Cyclohexyliden-1,2-diisocyanat, Cyclohexyliden-1,4-diisocyanat, Polyisocyanat-Vorpolymerisat, z.B. Anlagerungsprodukt von Hexamethylendiisocyanat und Hexantriol, Anlagerungsprodukt von 2,4-Toluylendiisocyanat mit Brenzkatechin, Anlagerungsprodukt von Toluylendiisocyanat mit Hexantriol, Anlagerungsprodukt von Toluylendiisocyanat mit Trimethylolpropan, Anlagerungsprodukt von Xylylendiisocyanat mit Trimethylolpropan.

Geeignete modifizierte aliphatische Isocyanate sind solche auf Basis von Hexamethylen-1,6-diisocyanat, m-Xylylendiisocyanat, 4,4'-Diisocyanato-dicyclohexylmethan bzw. Isophorondiisocyanat, die pro Molekül mindestens zwei funktionelle Isocyanatgruppen besitzen.

Ebenfalls geeignet sind Polyisocyanate auf Grundlage von Derivaten des Hexamethylen-1,6-diisocyanats mit Biuretstruktur, deren Herstellung in DE-B-11 01 394, DE-B-15 43 178, DE-A-15 68 017 und DE-A-19 31 055 beschrieben ist.

Die Polyisocyanate können zusätzlich modifiziert werden durch Umsetzung mit di- und trifunktionellen Kettenverlängerern, z.B. Wasser, mit mehrfunktionellen Alkoholen wie Ethandiol, Glycerin oder Trimethylolpropan bzw. Carbonsäuren, wie Bernsteinsäure, Adipinsäure, Sebacinsäure, in Anteilen von 0,01 bis 0,5 Mol pro Isocyanat-Äquivalent.

Anstelle oder neben den Isocyanatgruppen können als reaktive Gruppen auch Carbodiimid-, Uretdion-, Uretonimin-, Uretdiondiimin-, 4-Imino-oxazolidinon-(2)-, β-Alkylen-propiolacton- bzw. Cyclobutandion-(1,3)-Gruppen vorhanden sein.

So sind beispielsweise einsetzbar Polyisocyanato-polyuretonimine, wie sie durch Carbodiimidisierung von Biuretgruppen enthaltendem Hexamethylen-1,6-diisocyanat mit Phosphor-organischen Katalysatoren entstehen, durch weitere Umsetzung primär gebildeter Carbodiimidgruppen mit Isocyanatgruppen zu Uretonimingruppen. Je nach Reaktionsbedingungen kann das resultierende modifizierte Polyisocyanat erhebliche Anteile an Oxadiazintrion, Triisocyanurat bzw. sym. Triazindionimin als

Strukturelement enthalten.

Besonders geeignet sind Diisocyanate der Formel (I)

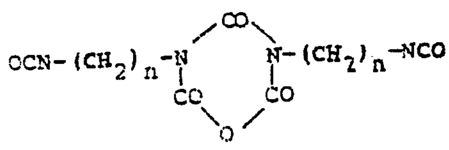

(I)

n = 3 bis 6.

Geeignete Diamine sind aliphatische, primäre oder sekundäre Diamine, wie :

Ethylendiamin-(1,2), Bis(3-aminopropyl)-amin, Hydrazin, Hydrazinethanol-(2), Bis-(2-methylaminoethyl)-methylamin, 1,4-Diaminocyclohexan, 3-Amino-1-methyl-aminopropan, N-Hydroxy-ethylethylendiamin, N-Methyl-bis-(3-aminopropyl)-amin, 1,4-Diamino-n-butan, 1,6-Diamino-n-hexan, Ethylen-(1,2)-diamin-N-ethyl-sulfonsäure (als Alkalisalz), 1-Aminoethylethylendiamin-(1,2), Bis-(N,N'-aminoethyl)-ethylendiamin-(1,2). Hydrazin und seine Salze werden im vorliegenden Zusammenhang ebenfalls als Diamine angesprochen.

Beispiele für Farbbildner sind z.B. Triphenylmethanverbindungen, Diphenylmethanverbindungen, Xanthenverbindungen, Thiazinverbindungen, Spiropyranverbindungen.

Besonders geeignet sind : Triphenylmethanverbindungen : 3,3-Bis-(p-dimethylaminophenyl)-6-dimethylaminophthalid (« Kristallviolettlacton », nachstehend als « K.V.L. » bezeichnet) und 3,3-Bis-(p-dimethylaminophenyl)-phthalid (« Malachitgrünlacton ») ; Diphenylmethanverbindungen : 4,4'-Bisdimethylaminobenzhydrylbenzylether, N-Halogenphenylleucolamin, N-β-Naphthylleucolamin, N-2,4,5-Trichlorphenylleucolamin, N-2,4-Dichlorphenylleucolamin ; Xanthenverbindungen : Rhodamin-β-anilinolactam, Rhodamin-β-(p-nitroanilin)-lactam, Rhodamin-β-(p-chloranilin)-lactam, 7-Dimethyl-amin-2-methoxyfluoran, 7-Diethylamin-3-methoxyfluoran, 7-Diethylamin-3-methylfluoran, 7-Diethylamin-3-chlorfluoran, 7-Diethylamin-3-chlor-2-methylfluoran, 7-Diethylamin-2,4-dimethylfluoran, 7-Diethylamin-2,3-dimethylfluoran, 7-Diethylamin-(3-acetylmethylamin)-fluoran, 7-Diethylamin-3-methylfluoran, 3,7-Diethylaminofluoran, 7-Diethylamino-3-(dibenzylamin)-fluoran, 7-Diethylamin-3-(methylbenzylamin)-fluoran, 7-Diethylamin-3-(chlorethylmethylamino)-fluoran, 7-Diethylamin-3-(dichlorethylamin)-fluoran, 7-Diethylamin-3-(diethylamin)-fluoran ; Thiazinverbindungen : N-Benzoylleucomethylenblau, o-Chlorbenzoylleucomethylenblau, p-Nitrolbenzoylleucomethylenblau ; Spiroverbindungen : 3-Methyl-2,2'-spirobis-(benzo(f)-chromen).

Lösungsmittel, die diese Farbbildner lösen, sind z.B. chloriertes Diphenyl, chloriertes Paraffin, Baumwollsamenöl, Erdnußöl, Siliconöl, Trikresylphosphat, Monochlorbenzol, ferner teilhydrierte Terphenyle, alkylierte Diphenyle, alkylierte Naphthaline, Arylether, Aralkylether, höher alkyliertes Benzol und andere.

Häufig werden den Lösungsmitteln Verdünnungsmittel zugesetzt, wie beispielsweise Kerosin, n-Paraffine, Isoparaffine.

Zur Herstellung der Mikrokapseln werden zunächst die Farbgeber und das Isocyanat in den genannten Lösungsmitteln gelöst und diese organische Phase in der kontinuierlichen wäßrigen Phase, die Schutzkolloid und gegebenenfalls Emulgatoren enthalten kann, emulgiert. Zur Emulsion gibt man eine wäßrige Polyaminlösung in stöchiometrischer Menge zum Polyisocyanat in der organischen Phase.

Zur Emulgierung und Stabilisierung der gebildeten Emulsion werden der wäßrigen Phase Schutzkolloide und Emulgierhilfsmittel zugesetzt. Beispiele für solche als Schutzkolloide wirkende Produkte sind Carboxymethylcellulose, Gelatine und Polyvinylalkohol. Beispiele für Emulgatoren sind oxethyliertes 3-Benzylhydroxybiphenyl, Umsetzungsprodukte von Nonylphenol mit unterschiedlichen Mengen Ethylenoxid und Sorbitanfettsäureester.

Die Mikrokapseln können kontinuierlich oder diskontinuierlich hergestellt werden. Man verwendet im allgemeinen Dispergiergeräte, die ein Schergefälle erzeugen. Beispiele hierfür sind Blatt-, Korb-, Schnellrührer, Kolloidmühlen, Homogenisatoren, Ultraschalldispergatoren, Düsen, Stahldüsen, Supratonmaschinen. Die Stärke der Turbulenz beim Vermischen ist in erster Linie bestimmend für den Durchmesser der erhaltenen Mikrokapseln. Kapseln in der Größe von 1 bis 2 000 µm können hergestellt werden. Bevorzugt sind Kapseln mit Durchmessern von 2 bis 20 µm. Die Kapseln agglomerieren nicht und haben eine enge Teilchengrößenverteilung. Das Gewichtsverhältnis von Kernmaterial zu Hüllenmaterial ist 50 bis 90 zu 50 bis 10.

Nach der Zugabe der Diaminlösung werden der Suspension die Salze oder Hydroxide der Erdalkalimetalle, wie beispielsweise Calciumchlorid oder Calciumhydroxid oder Silikate, wie z.B. Natriumsilikat (Wasserglas) zugesetzt, die im weiteren Verlauf der kapselwandbildenden Reaktion in die Trockenhilfsmittel überführt werden.

Die Menge der Salze ist so bemessen, daß alles Kohlendioxid, das während der weiteren Abreaktion der Kapselwandbildung entwickelt wird, zur Fällung der Carbonate ausgenutzt wird. Die Menge des sich entwickelnden Kohlendioxids hängt von der Art des eingesetzten Isocyanats und des verwendeten Vernetzers ab und kann empirisch ermittelt werden.

In gleicher Weise kann auch die pH-Werterniedrigung während der Abreaktion verfolgt werden.

Die Menge des zuzusetzenden Natriumsilikats wird so berechnet, daß 0,5 bis 5 %, bezogen auf den Kapselanteil der Suspension, an Siliziumdioxid ausgefällt wird. Zur schnelleren Ausreaktion der Polyaddition wird die Suspension mit Zusatzstoffen unter Rühren auf 60 °C erwärmt und sodann mindestens weitere 2 Stunden bei 60 °C gehalten.

Die ausreagierten Dispersionen können in handelsüblichen Vorrichtungen zur Sprühtrocknung nach bekannten Verfahren getrocknet werden. Beim erfindungsgemäßen Verfahren fallen die Mikrokapseln als freifließendes, agglomeratfreies Pulver an.

## Beispiel 1

11,22 g Benzoylleukomethylenblau (NBL) und 33,66 g Kristallviolettlacton (KVL) werden in 780,1 g Diisopropylnaphthalin durch Erwärmen auf maximal 95 °C und unter Rühren gelöst und zu dieser Lösung 195 g Isohexadecan und 180 g Oxadiazintriondiisocyanat zugegeben. Diese organische Phase wird in 2 250 g einer 0,5 %igen wäßrigen Lösung von Polyvinylalkohol gegeben und an einer Ultraschallpfeife emulgiert, wobei eine Tröpfchengröße von ca. 10 µm eingestellt wird. Dieser Emulsion wird unter Rühren eine 5,5 %ige Aminlösung, bestehend aus 18,9 g Diethylentriamin und 9,8 g Ethylendiamin in 505,1 g entsalztem Wasser zugefügt. Die Aminmengen sind stöchiometrisch auf das Isocyanat berechnet. Nach der Aminzugabe werden unter Rühren 104 g Calciumchlorid ($CaCl_2 \cdot 6H_2O$), gelöst in 200 g Wasser, zur Suspension gegeben.

Anschließend wird innerhalb 1,5 Stunden auf 60 °C erhitzt und 2 Stunden bei 60 °C nachgerührt. Während der Nachbehandlung war keine $CO_2$-Entwicklung festzustellen, und die Suspension blieb völlig schaumfrei.

## Beispiel 2

Es wurde wie in Beispiel 1 verfahren, mit der Abweichung, daß anstelle des Calciumchlorids nach der Aminzugabe 35,15 g einer Aufschlämmung von Calciumhydroxid in 200 g Wasser zugefügt wurde.

## Beispiel 3

Es wurde wie in Beispiel 1 verfahren, mit der Abweichung, daß nach der Aminzugabe 95 g einer 30 %igen Kieselsol in Wasser zur Suspension gegeben wurde.

## Beispiel 4 (Vergleichsbeispiel)

Es wurde wie in Beispiel 1 verfahren, jedoch wurde ohne Zugabe eines Zusatzmittels, direkt nach der Aminzugabe, die Suspension aufgeheizt und thermisch nachbehandelt. Bei der Nachbehandlung entwickelten sich hierbei 1,3 l Kohlendioxid und die Slurry schäumte stark auf.

## Sprühtrocknung der Slurries

Die nach Beispiel 1 bis 4 hergestellten Kapselsuspensionen wurden in einem handelsüblichen Sprühtrockner (« Niro Atomizer ») getrocknet. Der Stoffeintrag erfolgte über eine Zweistoffdüse, die Lufttemperatur betrug 200 °C beim Eintritt, die Austrittstemperatur betrug 90 °C. Es wurden etwa 3 l Suspension pro Stunde durchgesetzt. Man erhielt unter diesen Bedingungen folgendes Ergebnis :

| Suspension | Menge (g) Belag im Trockenturm | in Vorlage | Beschaffenheit der getrockneten Suspension |
|---|---|---|---|
| Beispiel 1 | 210 g | 670 g | sehr wenig Agglomerate |
| Beispiel 2 | 260 g | 700 g | sehr wenig Agglomerate |
| Beispiel 3 | 150 g | 810 g | agglomeratfrei |
| Beispiel 4 | 680 g | 285 g | stark agglomeriert, nicht redispergierbar |

**Ansprüche**

1. Verfahren zur Sprühtrocknung von wässrigen Suspensionen von Mikrokapseln mit Wänden aus Polyharnstoff, die in an sich bekannter Weise durch Grenzflächenpolyaddition aus Polyisocyanat und

Polyamin gebildet wurden, dadurch gekennzeichnet, daß man dem wässrigen Reaktionsgemisch aus Polyisocyanat und Polyamin 1 bis 10 Gew.-Teile, bezogen auf Mikrokapseln, eines wasserlöslichen Erdalkalisalzes und/oder eines wasserlöslichen Silikats zufügt.

2. Verfahren nach Anspruch 1, dadurch gekennzeichnet, daß das Erdalkalisalz Calciumchlorid oder Calciumhydroxid ist.

3. Verfahren nach Anspruch 1, dadurch gekennzeichnet, daß das Silikat Natriumsilikat (Wasserglas) ist.

**Claims**

1. A process for spray drying aqueous suspensions of microcapsules having walls of polyurea which have been formed in known manner from polyisocyanate and polyamine by interface polyaddition, characterised in that from 1 to 10 parts by weight, based on the microcapsules, of a water-soluble alkaline earth metal salt and/or of a water-soluble silicate are added to the aqueous reaction mixture of polyisocyanate and polyamine.

2. A process according to claim 1, characterised in that the alkaline earth metal salt is calcium chloride or calcium hydroxide.

3. A process according to claim 1, characterised in that the silicate is sodium silicate (waterglass).

**Revendications**

1. Procédé de séchage par pulvérisation de suspensions aqueuses de microcapsules avec parois en polyurée, qui ont été formées d'une manière connue en elle-même par polyaddition à la surface limite d'un polyisocyanate et d'une polyamine, caractérisé en ce qu'on ajoute au mélange réactionnel aqueux de polyisocyanate et de polyamine 1 à 10 % en poids d'un sel alcalino-terreux soluble dans l'eau et/ou d'un silicate soluble dans l'eau par rapport aux microcapsules.

2. Procédé selon la revendication 1, caractérisé en ce que le sel alcalino-terreux est du chlorure de calcium ou de l'hydroxyde de calcium.

3. Procédé selon la revendication 1, caractérisé en ce que le silicate est du silicate de sodium (verre soluble).